# EUROPÄISCHE PATENTANMELDUNG

(11) **EP 1 988 214 A2**
(43) Veröffentlichungstag der Anmeldung: **05.11.2008**
(21) Anmeldenummer: 08008184.7
(22) Anmeldetag: 29.04.2008
(51) Int. Cl.: E01H 1/00, E01H 1/08, B60K 11/00, B60K 13/00, F01N 3/00, E01H 11/00, B01D 53/00

(54) **Kehrmaschine**

(30) Priorität: 30.04.2007 DE 102007020350
(71) Anmelder: Hettich, Robert, 83620 Feldkirchen-Westerham (DE)
(72) Erfinder: Hettich, Robert, 83620 Feldkirchen-Westerham (DE)
(74) Vertreter: Manitz, Finsterwald & Partner GbR

(57) **Zusammenfassung**

Die Erfindung betrifft eine Kehrmaschine mit einem Verbrennungsmotor zum Antreiben der Maschine, einem Partikelfilter zum Filtern der aus dem Motor austretenden Abgase und einem Wasserverdampfer, der von aus dem Partikelfilter austretenden Abgasen durchströmt werden kann. In den Wasserverdampfer ist über eine Düse Wasser einsprühbar, wobei der Wasserverdampfer über ein Rohrsystem mit wenigstens einer Austrittsdüse derart in Verbindung steht, dass der in dem Wasserverdampfer erzeugte Wasserdampf mit den Abgasen ausgeleitet wird.

## Beschreibung

Die vorliegende Erfindung betrifft eine Kehrmaschine, die zur Reinigung von Straßen oder anderen Flächen eingesetzt werden kann.

Bei herkömmlichen Kehrmaschinen, wie sie insbesondere in Kommunen zur Straßenreinigung eingesetzt werden, wird Staub von rotierenden Besen aufgewirbelt und von der Maschine aufgenommen. Um den Staub zu binden, wird Wasser sowohl vor die rotierenden Besen als auch in die Schmutzaufnahmevorrichtung, beispielsweise bei saugend aufnehmenden Maschinen in einen Saugschacht eingesprüht. Das in die Schmutzaufnahmevorrichtung eingesprühte Wasser dient dabei auch zur Reinigung und Schmierung des Aufnahmeweges.

Derartige Kehrmaschinen haben verschiedene Nachteile. Insbesondere bei großer Trockenheit gelingt es durch das versprühte Wasser nicht vollständig, den aufgewirbelten und angesaugten Staub zu binden. Gerade in hohem Maße gesundheitsschädlicher Feinstaub wird häufig über die Abluft wieder an die Umwelt abgegeben. Im Schmutzbehälter der Maschine kann zudem aufgrund des hohen Anteils an aufgenommenem Wasser nur vergleichsweise wenig Schmutz aufgenommen werden. Ein weiterer Nachteil der herkömmlichen Technik ist der hohe Wasserverbrauch. Um einen Kubikmeter Staub aufzunehmen, werden bis zu 300 1 Wasser benötigt. Da derart große Wassermengen gerade in kleineren Kehrmaschinen nicht bevorratet werden können, arbeiten viele Maschinen mit einem wartungsintensiven und aufwändigen Wasserumlaufsystem.

Aus dem 1968 eingetragenen deutschen Gebrauchsmuster 1 992 790 ist eine Vorrichtung zur Staubbindung bei Kehrmaschinen bekannt, welche statt Wasser Wasserdampf zur Staubbindung verwendet. Wasser wird möglichst nahe am Zylinderausgang in den Auspuffkrümmer eingespritzt und wird durch den heißen Abgasstrahl zerstäubt und verdampft. Diese Vorrichtung hat sich als nicht praxistauglich erwiesen.

Der vorliegenden Erfindung liegt die Aufgabe zugrunde, eine Kehrmaschine zur Verfügung zu stellen, die in der Lage ist, bei möglichst geringer Umweltbelastung und mit möglichst geringem Aufwand auch feinsten Staub zuverlässig zu binden.

Diese Aufgabe wird durch eine Kehrmaschine gemäß Anspruch 1 gelöst.

Erfindungsgemäß wird die Kehrmaschine von einem Verbrennungsmotor angetrieben und weist einen Partikelfilter zum Filtern der aus dem Motor austretenden Abgase auf. Die Maschine verfügt zudem über einen Wasserverdampfer, der von aus dem Partikelfilter austretenden Abgasen durchströmt werden kann. In den Wasserverdampfer ist über mindestens eine Düse Wasser einsprühbar, wobei der Wasserverdampfer über ein Rohrsystem mit wenigstens einer Austrittsdüse derart in Verbindung steht, dass der in dem Wasserverdampfer erzeugte Wasserdampf mit den Abgasen ausgeleitet wird.

Die aus dem Partikelfilter in den Wasserverdampfer strömenden Abgase sind weitgehend schadstofffrei, so dass das Problem einer Einleitung von giftigen Abgasen in das Fahrerhaus nicht besteht. Die Abgastemperatur beträgt am Ausgang des Dieselpartikelfilters bei den zum Kehren und Fahren notwendigen Drehzahlen etwa 300° C, so dass das in den Wasserverdampfer vorzugsweise unter Druck eingesprühte Wasser schnell in Wasserdampf mit Temperaturen von über 110°C verwandelt werden kann. Für eine Staubbindung mit Wasserdampf werden nur etwa 8-101 Wasser pro Arbeitsstunde benötigt und der Wasserdampf ermöglicht eine Bindung auch kleinster Feinstaubpartikel und kann darüber hinaus auch zur Unkrautbeseitigung eingesetzt werden.

Ein positiver Nebeneffekt der Erfindung ist eine zusätzliche Geräuschdämmung, da das Ausleiten der Abgase über den Wasserverdampfer und das Rohrsystem geräuschärmer ist als ein Ausleiten der Abgase über einen üblichen Auspuff.

Vorteilhafte Ausführungsformen der Erfindung sind in der nun folgenden Beschreibung sowie in den Unteransprüchen angegeben.

Gemäß einer vorteilhaften Ausführungsform der Erfindung weist die Kehrmaschine einen Vorratsbehälter für Wasser auf, der über eine regelbare Pumpe mit der oder den Düsen in Verbindung steht, über die das Wasser in den Wasserverdampfer eingesprüht wird. Der Fahrer kann mit Hilfe der regelbaren Pumpe die Menge des zu erzeugenden Wasserdampfs einstellen. Zudem ermöglicht die Pumpe, das Wasser unter erhöhtem Druck in den Wasserverdampfer einzuleiten, so dass Wasserdampf mit Temperaturen von etwa 115°C erzeugt und mit hoher Geschwindigkeit ausgestoßen werden kann. Vorteilhaft kann hier eine Hochdruckpumpe mit verstellbarem Druck sein, die beispielsweise hydraulisch aktiviert wird und die einen Druck in einem Bereich von etwa 200 bar bis etwa 500 bar oder höher, oder beispielsweise bis etwa 350 bar erzeugen kann. Eine solche Hochdruckpumpe kann auch als zusätzliche Hochdruckpumpe neben einer herkömmlichen Pumpe vorgesehen werden.

Nach einer weiteren vorteilhaften Ausführungsform kann der Ausgang der Hochdruckpumpe direkt über eine Leitung in den Bereich eines Saugschachts oder eines Besens, insbesondere eines Tellerbesens, der Kehrmaschine geleitet werden. Wenn dann im Bereich des Saugschachts oder des Besens eine oder mehrere Austrittsdüsen vorgesehen werden, kann die Dampferzeugung unmittelbar in diesen Bereichen erfolgen, so dass auch eine Reinigung des Saugschachtes und des Besens bewirkt werden kann.

Um die Temperatur des Wasserdampfs weiter zu erhöhen, kann der Vorratsbehälter mit einer Vorwärmeinrichtung versehen sein, die Wasser auf etwa 60-65° C vorwärmt. Diese Vorwärmeinrichtung kann einen oder mehrere Wärmetauscher umfassen. Als Medium für einen solchen Wärmetauscher kann beispielsweise Motorkühlwasser und/oder Hydrauliköl verwendet werden, so dass für das Vorwärmen des Wassers in dem Vorratsbehälter keine zusätzliche Energie benötigt wird. Das Hydrauliköl und/oder das Motorkühlwasser werden zudem in dem Wärmetauscher beim Aufwärmen des Wassers abgekühlt, so dass zusätzlich die Kühlung des Motors bzw. der Hydraulikanlage und dadurch der Wirkungsgrad verbessert wird. Eine besonders effiziente Vorwärmung wird durch die Verwendung von zwei Wärmetauschern erzielt, wobei einer mit Motorkühlwasser und der andere mit Hydrauliköl als Medium arbeiten kann.

Vorzugsweise sind mehrere, paarweise und insbesondere spiegelbildlich zueinander angeordnete Düsen vorgesehen, um das Wasser in den Wasserverdampfer zu sprühen und optimal zu verwirbeln. Die Anzahl der Düsen bzw. der Düsenpaare, die benötigt wird, um eine optimale Wasserdampferzeugung zu erzielen, hängt von dem Motortyp ab und kann für jede Kehrmaschine dementsprechend ausgewählt werden.

Gemäß einer bevorzugten Ausführungsform der Erfindung ist eine Düse in einem Trichter angeordnet, wobei der Trichter derart ausgebildet und angeordnet ist, dass zumindest ein Teil des eingesprühten Wassers in Richtung der Strömungsrichtung des Abgases in den Wasserverdampfer eingesprüht wird. Das in Strömungsrichtung des Abgases eingesprühte Wasser tritt als Wasserdampf mit höherer Geschwindigkeit aus der Kehrmaschine aus, so dass die Reinigungseigenschaften verbessert werden. Die Form sowie die Lage der Trichter, insbesondere der Winkel zwischen den Trichtern und der Strömungsrichtung des Abgases sowie der Öffnungswinkel der Trichter, können ebenfalls motorabhängig optimiert werden.

Die Düsen mitsamt den eventuell vorhandenen Trichtern sind vorzugsweise außerhalb eines Verdampfungsbereiches des Wasserverdampfers angeordnet, um ein schnelles Verkalken der Düsen und der Trichter zu verhindern.

Gemäß einer weiteren vorteilhaften Ausführungsform der Erfindung zweigt zwischen dem Partikelfilter und dem Wasserverdampfer ein von einem Ventil verschließbares Auspuffrohr ab, über welches die aus dem Partikelfilter ausströmenden Gase direkt aus der Kehrmaschine leitbar sind. Bei Transportfahrten kann dieses Ventil geöffnet werden, so dass die Abgase wie bei einem normalen Kraftfahrzeug über das Auspuffrohr abgeleitet werden. Auch wenn die Kehrmaschine ohne Wasserdampf betrieben werden soll, kann das Ventil geöffnet werden, um die Abgase auf dem kürzesten Weg aus der Maschine zu leiten.

Vorzugsweise sind mehrere Austrittsdüsen vorgesehen, die unterschiedliche Funktionen erfüllen können. So kann beispielsweise eine der Austrittsdüsen in Fahrtrichtung vor einem Besen, insbesondere einem rotierenden Tellerbesen, angeordnet sein. Der aus dieser Düse austretende heiße Wasserdampf löst den Staub und bindet ihn, so dass der Staub von dem Besen über eine Schmutzaufnahmevorrichtung in einen Schmutzbehälter der Kehrmaschine transportiert werden kann und in diesem Schmutzbehälter verbleibt. Eine Breitstrahldüse ist zu diesem Zweck besonders geeignet, da damit auch größere Flächen effizient gereinigt werden können.

Eine weitere Austrittsdüse kann in einer Schmutzaufnahmevorrichtung, beispielsweise in einem Saugschacht, insbesondere im Bereich von dessen Eingangsmündung, angeordnet sein. Der aus dieser Düse austretende Dampf bindet den aufgenommenen Staub und kann zudem bei saugend aufnehmenden Maschinen je nach Austrittsrichtung des heißen Wasserdampfes die Saugwirkung verstärken. Die in dem Saugschacht angeordnete Austrittsdüse kann verschwenkbar sein, um die Austrittsrichtung des heißen Wasserdampfes einzustellen. Dies erlaubt insbesondere auch eine Einstellung des für den Motor vorgeschriebenen Abgasgegendrucks. Schwenkt man die Austrittsdüse gegen den Saugstrom, steigt der Abgasgegendruck, schwenkt man sie umgekehrt in den Saugstrom, sinkt der Abgasgegendruck. Damit kann der durch die an einer oder mehreren anderen Austrittsdüsen austretenden Abgase beeinflusste Abgasgegendruck auf den gewünschten Wert reguliert werden. Anstelle einer verschwenkbaren Austrittsdüse kann auch eine feststehende Austrittsdüse in dem Saugschacht verwendet werden, wobei dann der Austrittswinkel des Wasserdampfes in Abhängigkeit von dem verwendeten Motor so gewählt wird, dass der für diesen Motor erforderliche Abgasgegendruck erzielt wird.

Gemäß einer weiteren vorteilhaften Ausführungsform der Erfindung ist eine Austrittsdüse als Unkrautvernichtungsdüse ausgebildet und seitlich an der Kehrmaschine angebracht. Der aus dieser Düse austretende heiße Wasserdampf dient zur nachhaltigen Vernichtung von Unkraut, welches in Rinnsteinen, auf Bürgersteigen oder sonstigen Flächen wächst. Durch den heißen Wasserdampf wird das Unkraut nicht nur oberflächlich entfernt, sondern die Pflanzen werden durch die Hitze derartig geschädigt, dass zumindest mittelfristig kein Unkraut an den behandelten Stellen nachwächst.

Eine solche Unkrautvernichtungsdüse kann verschwenkbar an der Kehrmaschine angebracht sein, so dass je nach Stellung der Düse Unkraut in der Rinnsteinkante oder größere Unkrautflächen bekämpft werden können. Um Unkraut in der Rinnsteinkante zu vernichten, kann die Düse beispielsweise derart ausgerichtet oder verschwenkt werden, dass der Wasserdampf parallel zur Fahrtrichtung aus der Kehrmaschine austritt. Um Unkrautflächen auf der Straße oder auf Plätzen zu behandeln, kann die Düse quer zur Fahrtrichtung verschwenkt werden. Auch für die Unkrautvemichtungsdüse ist eine Breitstrahldüse besonders geeignet.

Vorteilhafterweise ist die Dampfzufuhr zu jeder der Austrittsdüsen jeweils individuell regelbar. So kann der Fahrer der Kehrmaschine entscheiden, ob er beispielsweise über eine vorhandene Unkrautvernichtungsdüse heißen Wasserdampf versprühen will, oder ob der gesamte zur Verfügung stehende Dampf zur Oberflächenreinigung vor einem Besen und/oder zum Binden des angesaugten Staubs in einer Schmutzaufnahmevorrichtung verwendet werden soll.

Um den Dampf besonders wirksam auf das Kehrgut aufzubringen, kann nach einer weiteren Ausführungsform zumindest eine Austrittsdüse so angeordnet sein, dass der austretende Dampf durch einen rotierenden Besen der Kehrmaschine hindurchgeführt wird. Besonders vorteilhaft ist es, wenn der Dampf in das Zentrum eines Tellerbesens transportiert wird.

Die Einbringung von Wasserdampf in das Innere eines Tellerbesens erhöht die Effizienz, spart Wasserdampf, macht die Kehrmaschine windunabhängig und verhindert, dass diese in einer störenden Dampfwolke arbeitet.

Nach einer weiteren vorteilhaften Ausführungsform kann ein rotierender Besen der Kehrmaschine mit Speichen versehen sein, zwischen denen Dampf in den Besen eintreten kann. Hierbei kann der Besen zusätzlich mit Leitschaufeln ausgebildet sein, um die Zubringung des Wasserdampfes zu verbessern. Auch ist es möglich, dass die Speichen als Leitschaufeln ausgebildet sind.

Nachfolgend werden noch weitere Ausführungsformen beschrieben, die sich auch für Kehrmaschinen eignen, welche nicht mit Katalysatoren, Partikelfiltern, Wasserverdampfern und/oder Austrittsdüsen versehen sind.

So kann nach einer weiteren vorteilhaften Ausführungsform ein Gebläse vorgesehen sein, das einen ersten und einen zweiten tangentialen Auslass aufweist, wobei der erste und der zweite Auslass um etwa 180° zueinander versetzt sind. Auf diese Weise ist es möglich, mit Hilfe des ersten Auslasses staubbelastete Gebläseabluft auszuschleusen und die saubere Gebläseabluft durch den zweiten Auslass abzuführen. In diesem Zusammenhang kann es vorteilhaft sein, wenn der erste Auslass gegenüber der Horizontalen nach unten gerichtet ist und der zweite Auslass gegenüber der Horizontalen nach oben gerichtet ist, da in diesem Fall die schwereren Staub- und Schmutzpartikel in Richtung der Schwerkraft aus dem Gebläse ausgeschleust werden.

Nach einer weiteren vorteilhaften Ausführungsform kann ein Gebläse vorgesehen sein, das einen Auslass für staubbelastete Gebläseluft aufweist, der über einen Kanal in ein Saugrohr der Kehrmaschine rückgeführt ist. Auf diese Weise wird die an die Umgebung abgegebene Abluft zusätzlich gereinigt.

Es kann vorteilhaft sein, wenn sich der Kanal zwischen dem Gebläse und dem Saugrohr in Richtung des Saugrohres verjüngt, da die Venturi-Wirkung eine eventuelle Leistungsminderung durch Staudruck verhindert.

Nach einer weiteren vorteilhaften Ausführungsform kann ein Gebläse vorgesehen sein, das eine Luftaustrittsöffnung für Abluft aufweist, die trichterförmig erweitert ist. Auf diese Weise wird der Abluftgegendruck und die Strömungsgeschwindigkeit verringert und dadurch die Filterwirkung verbessert.

Da die vorliegende Erfindung auf der Verwendung von möglichst schadstoffarmen Abgasen basiert, sollte der in der Kehrmaschine verwendete Motor wenigstens die EU3-Norm, vorzugsweise jedoch die EU4- oder EU5-Norm erfüllen. Entsprechend kann ein Katalysator zur Umwandlung des Kohlenmonoxydes in Kohlendioxyd vorgesehen sein.

Um den Eindruck von Sauberkeit zu erhöhen, den die erfindungsgemäße Kehrmaschine hinterlässt, können dem zu verdampfenden Wasser geeignete Geruchsstoffe beigefügt werden.

Im Folgenden wird die Erfindung anhand eines bevorzugten Ausführungsbeispiels und unter Bezugnahme auf die beigefügten Figuren rein beispielhaft beschrieben. Es zeigen:
- Fig. 1: eine schematische Darstellung einer saugend aufnehmenden Kehrmaschine;
- Fig. 2: eine schematische Darstellung einer weiteren Ausführungsform einer saugend aufnehmenden Kehrmaschine;
- Fig. 3: eine geschnittene Seitenansicht eines rotierenden Tellerbesens mit integrierter Dampfzuführung; und
- Fig. 4: eine Draufsicht auf ein Gebläse.

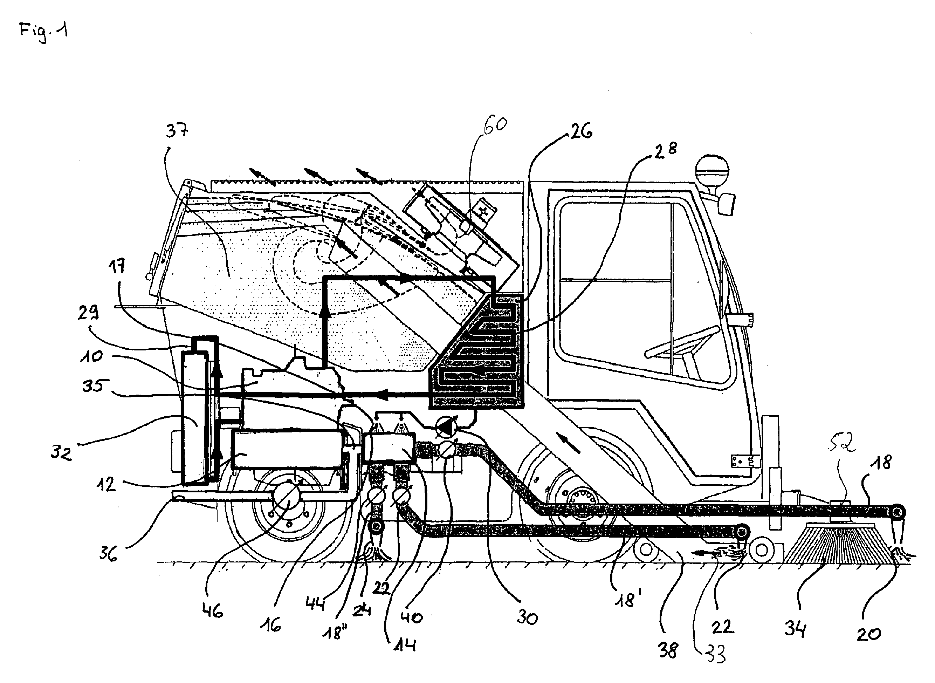

Die in Fig. 1 dargestellte Kehrmaschine kann insbesondere zur Straßenreinigung eingesetzt werden. Wie bei aus dem Stand der Technik bereits bekannten Kehrmaschinen ist vorne an der Maschine mindestens ein im Betrieb die Straße berührender, rotierender Tellerbesen 34 angeordnet. Üblicherweise werden wenigstens zwei nebeneinander angeordnete Tellerbesen 34 verwendet. Der von dem Tellerbesen 34 aufgewirbelte Staub wird von einem Gebläse 60, welches aus dem Stand der Technik bekannt ist und daher hier nicht näher beschrieben werden soll, über einen Saugschacht 33 und ein Saugrohr 38 angesaugt und gelangt so in einen Schmutzbehälter 37.

Die Kehrmaschine ist von einem möglichst emissionsarmen Motor 10 angetrieben, beispielsweise einem Dieselmotor nach Euro 4- oder Euro 5-Norm. Aus dem Dieselmotor 10 austretende Abgase werden zunächst durch einen Katalysator und einen Partikelfilter 12 geleitet. Von dem Partikelfilter 12 können die gefilterten und gereinigten Abgase über ein Verbindungsrohr 35 und ein von diesem abzweigendes Auspuffrohr 36 ausströmen. In dem Auspuffrohr 36 ist ein Absperrventil 46 vorgesehen, welches ein Verschließen des Auspuffrohrs 36 ermöglicht. Wenn das Ventil 46 geschlossen ist, strömen die Abgase aus dem Partikelfilter 12 über das Verbindungsrohr 35 in einen Wasserverdampfer 14. Oberhalb des Verdampfers 14 befinden sich zwei symmetrisch, vorzugsweise spiegelbildlich zueinander angeordnete Düsen 16, durch die Wasser in den Verdampfer 14 eingesprüht werden kann. Das hierfür benötigte Wasser ist in einem Vorratsbehälter 26 gelagert und kann von einer regelbaren Pumpe 30 zu den Düsen 16 gepumpt werden. Die Düsen 16 sind in kegelförmigen Trichtern 17 angeordnet, die sich in Strömungsrichtung erweitern, und liegen weit genug von dem Bereich des Verdampfers 14 entfernt, den das heiße Abgas durchströmt, so dass es im Bereich der Düsen 16 und der Trichter 17 noch nicht zu einer Verdampfung des Wassers kommt.

Der Wasserbehälter 26 ist mit einem Wärmetauscher 28 versehen. Dieser Wärmetauscher 28 verwendet Kühlflüssigkeit 29 aus einer Motorkühlung 32 als Medium zum Vorwärmen des in dem Wasserbehälter 26 vorhandenen Wassers. Die Kühlflüssigkeit 29 hat beim Eintritt in den Wasserbehälter 26 eine Temperatur von etwa 80° und wird beim Aufheizen des Wassers selbst abgekühlt, so dass auch die Motorkühlung durch diese Anordnung verbessert wird. Alternativ oder zusätzlich kann auch ein Wärmetauscher vorgesehen sein, der mit Hydrauliköl von einer Hydraulikanlage als Medium arbeitet.

Am Ausgang des Partikelfilters 12 besitzt das Abgas in Abhängigkeit von der Leistungsentnahme und der Arbeitsdrehzahl des Motors eine Temperatur von etwa 300 bis 400° C, so dass das über die Düsen 16 in den Wasserverdampfer 14 eingesprühte, bereits vorgewärmte Wasser sofort verdampft. Der auf diese Weise entstandene heiße Wasserdampf wird von dem ausströmenden Abgas mitgenommen und strömt in Rohre 18, 18', 18", die jeweils zu einer Austrittsdüse 20, 22, 24 führen.

In jedem der drei Rohre 18, 18', 18" ist ein Regelventil 40, 42, 44 vorgesehen, so dass der in dem Wasserverdampfer 14 erzeugte heiße Wasserdampf je nach Stellung der drei Ventile 40, 42, 44 unterschiedlich auf die drei Rohre 18, 18', 18" verteilt werden kann.

Ein erstes Rohr 18 mündet vor dem bzw. den eingangs bereits erwähnten Tellerbesen 34 in eine als Breitstrahldüse ausgebildete Austrittsdüse 20, die dazu dient, heißen Wasserdampf auf die zu reinigende Fläche zu sprühen, so dass Schmutz und Staub gelöst und gebunden und anschließend von dem bzw. den Besen 34 in Richtung des Saugschachtes 33 gefegt werden können. In der Figur ist zwar nur ein Tellerbesen 34 sichtbar, es können jedoch wenigstens zwei Tellerbesen 34 verwendet werden. Vor jedem Tellerbesen 34 kann wenigstens eine Austrittsdüse 20 angeordnet sein, so dass insgesamt zwei oder mehr Austrittsdüsen 20 heißen Wasserdampf vor die rotierenden Besen 34 sprühen können. Die Düsen 20 können quer zur Fahrtrichtung verschwenkbar sein.

Ein weiteres Rohr 18' mündet in eine Austrittsdüse 22 im Bereich des Saugschachts 33. Die Düse 22 ist verschwenkbar, so dass der Austrittswinkel des Wasserdampfs eingestellt werden kann. Dies dient insbesondere dazu, den für den Motor 10 vorgeschriebenen und durch die an den Austrittsdüsen 20, 24 austretenden Abgase beeinflussten Abgasgegendruck einzustellen. Der aus der Düse 22 austretende Wasserdampf sorgt für eine Bindung des von dem Saugrohr 38 angesaugten Staubes, so dass auch Feinstaub in dem Schmutzbehälter 37 verbleibt und nicht etwa durch das Gebläse 60 wieder in die Umwelt geblasen wird.

Ein drittes Rohr 18" führt von dem Verdampfer 14 ebenfalls über ein Regelventil 44 zu einer seitlich an der Kehrmaschine angeordneten Unkrautvemichtungsdüse 24. Diese Unkrautvernichtungsdüse 24 ist als Breitstrahldüse ausgebildet und ist in Fahrtrichtung und/oder quer dazu verschwenkbar. In einer ersten Position kann sie heißen Wasserdampf parallel zur Fahrtrichtung der Kehrmaschine in den Rinnstein sprühen, um dort wachsendes Unkraut zu beseitigen. Wird die Düse 24 zur Fahrtrichtung quer verschwenkt, so kann sie in dieser zweiten Position zusammen mit den Düsen vor den Tellerbesen zur Behandlung größerer Unkrautflächen verwendet werden. Das durch den heißen Wasserdampf mit Hilfe der Unkrautvernichtungsdüse 24 abgelöste Unkraut kann in einem weiteren Arbeitsschritt mit Hilfe des Besens 34 über das Saugrohr 38 in den Schmutzbehälter 37 befördert werden, wie oben für Staub und Schmutz beschrieben.

Für Transportfahrten wird die regelbare Pumpe 30 zum Verschließen des Vorratsbehälters 26 verwendet, so dass kein Wasser durch die Düsen 16 in den Wasserverdampfer 14 gesprüht wird. Gleichzeitig wird das Ventil 46 im Auspuffrohr 36 geöffnet, so dass die aus dem Partikelfilter 12 austretenden Abgase nicht in das Rohrsystem 18, 18', 18" gelangen, sondern über das Auspuffrohr 36 in die Umgebung geleitet werden.

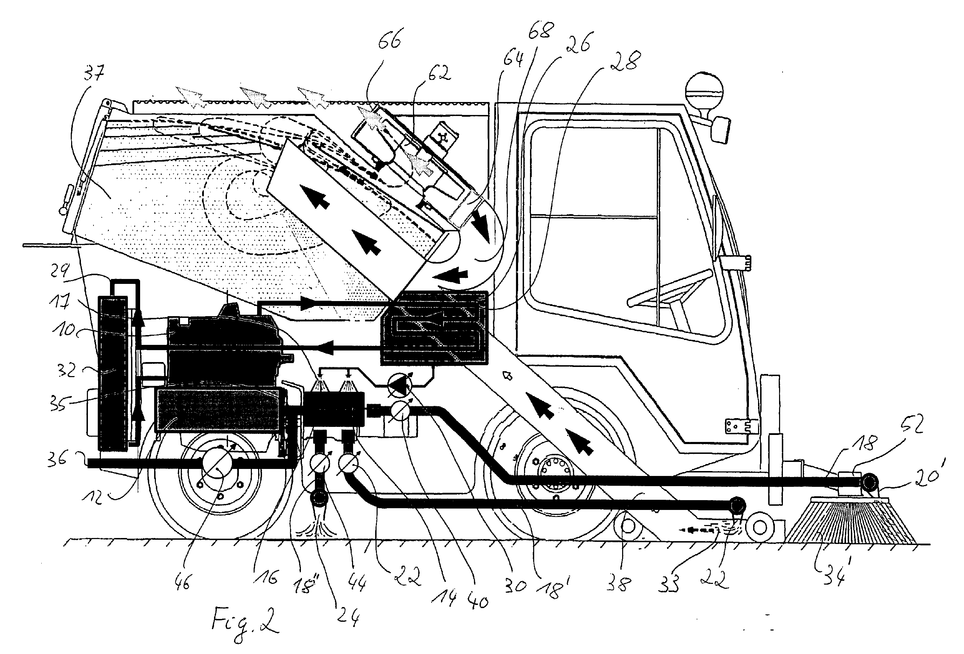

Fig. 2 zeigt eine weitere Ausführungsform einer Kehrmaschine, die der ersten Ausführungsform ähnelt, weshalb für gleiche Bauteile gleiche Bezugszeichen verwendet sind.

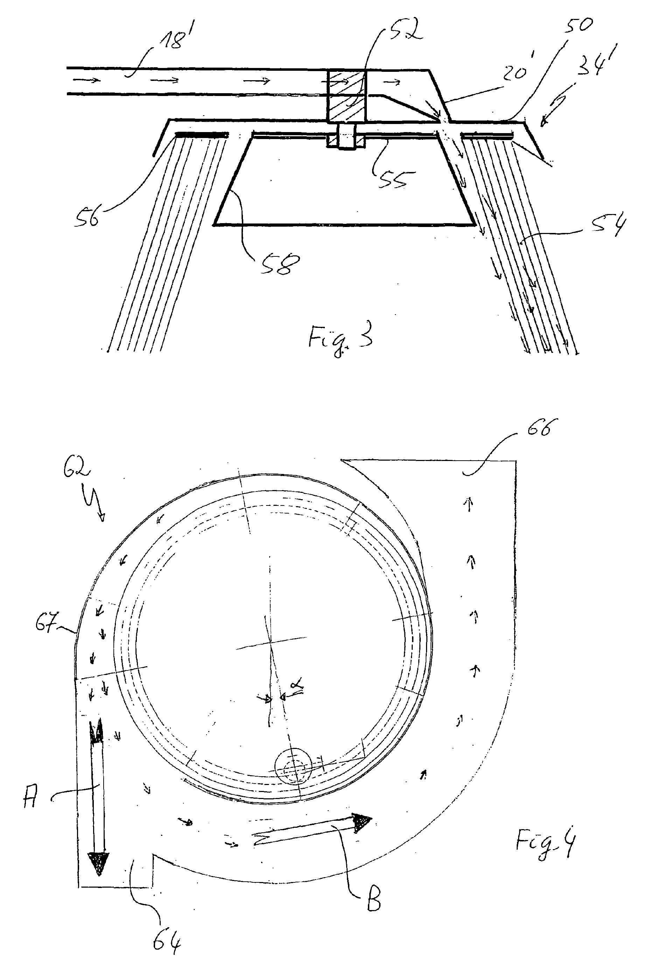

Bei der in Fig. 2 dargestellten Ausführungsform ist das zu dem vorderen Tellerbesen 34' führende Rohr 18 nicht bis vor den Tellerbesen 34' geführt, sondern es endet oberhalb des Tellerbesens 34', wobei die am Ende des Rohres 18 vorgesehene Austrittsdüse 20' so angeordnet ist, dass der austretende Dampf durch den Tellerbesen 34' hindurchgeführt wird. Fig. 3 zeigt eine Schnittansicht des Tellerbesens 34', wobei zu erkennen ist, dass der Wasserdampf durch das Rohr 18' zu der Austrittsdüse 20' geleitet wird, die oberhalb einer Besenabdeckung 50 montiert ist. Hierdurch kann der Wasserdampf in das Zentrum des Tellerbesens 34' eingebracht werden.

An der Besenabdeckung 50 ist ein Hydraulikmotor 52 gelagert, wobei die Besenabdeckung über einen Haltearm unterschiedlich positioniert werden kann.

Unterhalb der Besenabdeckung 50 ist an der sich drehenden Welle des Hydraulikmotors 52 eine Besenronde befestigt, die eine Innenronde 55 mit einer Aufnahme für die Antriebswelle des Hydraulikmotors 52 und eine Außenronde 56 zur Aufnahme der Besenborsten 54 umfasst. Die Außenronde 56 ist mit der Innenronde 55 über Speichen verbunden, die nach einer bevorzugten Ausführungsform nach Art von Lüfterradschaufeln bzw. Leitschaufeln ausgebildet sein können, um die Zubringung des Wasserdampfes zu verbessern. Im Innenraum des Tellerbesens 34' ist an der Innenronde 55 ein Umleitkonus 58 fest angebracht, der die Zuleitung des Wasserdampfes zu den Staub aufwirbelnden Besenborsten 54 gewährleistet.

Wie Fig. 2 ferner zeigt, wird der aufgewirbelte Staub von dem Gebläse 62 über den Saugschacht 33 bzw. das Saugrohr 38 angesaugt und gelangt dadurch in den Schmutzbehälter 37. Bei den beiden Ausführungsformen der Fig. 1 und Fig. 2 sind die Gebläse 60 und 62 unter einem Winkel von etwa 45° gegenüber der Horizontalen geneigt, d.h. die Drehachse der Gebläse verläuft unter etwa 45° zur Horizontalen. Im Gegensatz zu dem Gebläse 60 der Ausführungsformen von Fig. 1, bei dem die Abluft unter etwa 45° nach oben austritt, weist das in Fig. 2 dargestellte Gebläse 62 einen ersten und einen zweiten Auslass auf, um einerseits mit Partikeln und Staub belastete Gebläseluft wieder in den Schmutzbehälter 37 zurückzuführen und andererseits gereinigte Abluft über den zweiten Auslass an die Umgebung abzugeben.

Fig. 4 zeigt eine Schnittansicht des Gebläses 62, das in der Darstellung von Fig. 4 entgegen dem Uhrzeigersinn umläuft (die einzelnen Gebläseschaufeln sind in Fig. 4 nicht dargestellt). Das in axialer Richtung ansaugende Gebläse 62 weist einen ersten tangentialen Auslass 64 und einen zweiten tangentialen Auslass 66 auf, die beide um etwa 180° zueinander versetzt sind, wobei der erste Auslass 64 im eingebauten Zustand des Gebläses 62 gegenüber der Horizontalen nach unten und der zweite Auslass 66 gegenüber der Horizontalen nach oben gerichtet ist (vgl. Fig. 2). Das Gebläse 62 ist um einen Winkel α von etwa 10 bis 20° in Drehrichtung des Lüfterrades versetzt in die Kehrmaschine eingebaut. Hierdurch wird die Einbaubreite des Sauggebläses verringert und die Abluftkanäle für die saubere Abluft und für die staubbelastete Abluft können verkürzt und begradigt werden.

Innerhalb des Gebläses 62 schleudert die Zentrifugalkraft des Sauggebläses die mit dem restlichen Feinstaub belastete, wassergesättigte Luft in den Bereich der Außenwand 67 des Gebläses und trennt dadurch die staubbelastete Abluft von der sauberen Abluft. Zur Verbesserung der Ablufttrennung ist die Abluftöffnung des zweiten Auslasses 66 trichterförmig erweitert. Die durch den ersten Auslass 64 austretende staubbelastete Abluft tritt entlang der in tangentialer Richtung geradlinig weitergeführten Außenwand 67 in Richtung des Pfeils A aus, wohingegen die saubere Gebläseluft entlang des Pfeils B weiter umläuft und anschließend durch den zweiten Auslass 66 in die Umgebung austritt.

Wie Fig. 2 zeigt, wird die staubbelastete Abluft von einem etwa U-förmig gekrümmten Kanal 68 aufgenommen, der unter einem Winkel von etwa 55° in das geradlinige und rohrförmige Saugrohr 38 mündet. Der Querschnitt des Kanals 68 verringert sich bis zum Eintritt in das Saugrohr 38, da die beim Eintritt entstehende Venturi-Wirkung diese Verringerung ausgleicht. Der Querschnitt des Saugrohres 38 erweitert sich jedoch im Bereich des Eintritts des Kanals 68, damit die Ansaugluft nicht mit erhöhter Luftgeschwindigkeit und dadurch einer schlechteren Reinigung in den Schmutzbehälter 37 befördert wird. Der Übergang in das erweiterte Saugrohr 38 ist konisch und exzentrisch in Richtung der Gegenseite der Einleitung versetzt. Die Einleitung erfolgt in den Konus, damit keine die Leistung mindernden Wirbel entstehen und die Gebläseabluft leicht in das Saugrohr 38 eingespeist werden kann.

Die nicht durch den ersten Auslass 64 austretende Gebläseabluft, die frei von Staub ist, wird um die Außenwand des Gebläses 62 herum nach oben geführt und über einen großflächigen Abluftfilter oder einen Feinstaubfilter an die Atmosphäre abgegeben. Die Außenwand des Kanals für saubere Abluft und die Außenwand der Abluftöffnung des Gebläses sollen zur Verringerung der Einbaubreite versetzt parallel verlaufen.

### Bezugszeichenliste

- 10: Motor
- 12: Partikelfilter
- 14: Wasserverdampfer
- 16: Düse
- 17: Trichter
- 18, 18', 18": Rohr
- 20, 20': Austrittsdüse
- 22: Austrittsdüse
- 24: Unkrautvernichtungsdüse
- 26: Vorratsbehälter
- 28: Wärmetauscher
- 29: Kühlflüssigkeit
- 30: Pumpe
- 32: Motorkühlung
- 33: Saugschacht
- 34, 34': Tellerbesen
- 35: Verbindungsrohr
- 36: Auspuffrohr
- 37: Schmutzbehälter
- 38: Saugrohr
- 40, 42, 44: Regelventil
- 46: Absperrventil50 Besenabdeckung
- 52: Hydraulikmotor
- 54: Besenborsten
- 55: Innenronde
- 56: Außenronde
- 58: Umleitkonus
- 60,62: Gebläse
- 64: erster Auslass
- 66: zweiter Auslass
- 67: Außenwand
- 68: Kanal

- A: staubbelastete Gebläseabluft
- B: saubere Gebläseabluft

## Patentansprüche

1. Kehrmaschine mit einem Verbrennungsmotor (10) zum Antreiben der Maschine, einem Partikelfilter (12) zum Filtern der aus dem Motor (10) austretenden Abgase und einem von aus dem Partikelfilter (12) austretenden Abgasen durchströmbaren Wasserverdampfer (14), in den über wenigstens eine Düse (16) Wasser unter Druck einsprühbar ist, wobei der Wasserverdampfer (14) über ein Rohrsystem (18, 18', 18") mit wenigstens einer Austrittsdüse (20, 20', 22, 24) derart in Verbindung steht, dass der in dem Wasserverdampfer (14) erzeugte Wasserdampf mit den Abgasen ausgeleitet wird.

2. Kehrmaschine nach Anspruch 1,
**dadurch gekennzeichnet, dass**
ein Vorratsbehälter (26) für Wasser vorgesehen ist, der mit einer Vorwärmeinrichtung (28) versehen ist.

3. Kehrmaschine nach Anspruch 2,
**dadurch gekennzeichnet, dass**
die Vorwärmeinrichtung wenigstens einen Wärmetauscher (28) umfasst, wobei der Wärmetauscher (28) vorzugsweise mit einem Kreislauf für Motorkühlwasser (29) und/oder für Hydrauliköl in Verbindung steht.

4. Kehrmaschine nach zumindest einem der vorstehenden Ansprüche, **dadurch gekennzeichnet, dass**
die Düse in einem Trichter (17) angeordnet ist, wobei der Trichter (17) derart ausgebildet und angeordnet ist, dass zumindest ein Teil des eingesprühten Wassers in Richtung der Strömungsrichtung des Abgases in den Wasserverdampfer (14) eingesprüht wird.

5. Kehrmaschine nach zumindest einem der vorstehenden Ansprüche, **dadurch gekennzeichnet, dass**
die Düse außerhalb eines Verdampfungsbereiches des Wasserverdampfers (14) angeordnet ist.

6. Kehrmaschine nach zumindest einem der vorstehenden Ansprüche, **dadurch gekennzeichnet, dass**
zwischen dem Partikelfilter (12) und dem Wasserverdampfer (14) ein von einem Ventil (46) verschließbares Auspuffrohr (36) abzweigt, über welches die aus dem Partikelfilter (12) ausströmenden Gase direkt aus der Kehrmaschine leitbar sind.

7. Kehrmaschine nach zumindest einem der vorstehenden Ansprüche, **dadurch gekennzeichnet, dass**
eine Austrittsdüse als Unkrautvernichtungsdüse (24) ausgebildet und seitlich an der Kehrmaschine angebracht ist, wobei die Unkrautvernichtungsdüse (24) insbesondere in Fahrtrichtung und/oder quer dazu verschwenkbar ist.

8. Kehrmaschine nach zumindest einem der vorstehenden Ansprüche, **dadurch gekennzeichnet, dass**
eine Austrittsdüse (22) im Bereich einer Eingangsmündung einer Schmutzaufnahmevorrichtung angeordnet ist, wobei die Schmutzaufnahmevorrichtung insbesondere einen Saugschacht (33) umfasst, und die Austrittsdüse (20) im Bereich einer Eingangsmündung des Saugschachtes (33) angeordnet ist.

9. Kehrmaschine nach zumindest einem der vorstehenden Ansprüche,
**dadurch gekennzeichnet, dass**
zumindest eine Austrittsdüse (20') so angeordnet ist, dass der austretende Dampf durch einen rotierenden Besen (34') der Kehrmaschine hindurch geführt wird.

10. Kehrmaschine nach Anspruch 9,
**dadurch gekennzeichnet, dass**
der Besen (34') mit Speichen versehen ist, zwischen denen Dampf in den Besen (34') eintreten kann, wobei die Speichen insbesondere als Leitschaufeln ausgebildet sind.

11. Kehrmaschine nach zumindest einem der vorstehenden Ansprüche,
**dadurch gekennzeichnet, dass**
ein Gebläse (62) vorgesehen ist, das einen ersten (64) und einen zweiten tangentialen Auslass (66) aufweist, wobei der erste und der zweite Auslass um etwa 180° zueinander versetzt sind und/oder wobei der erste Auslass (64) gegenüber der Horizontalen nach unten und der zweite Auslass (66) gegenüber der Horizontalen nach oben gerichtet ist.

12. Kehrmaschine nach zumindest einem der vorstehenden Ansprüche,
**dadurch gekennzeichnet, dass**
ein Gebläse (62) vorgesehen ist, das einen Auslass (64) für staubbelastete Gebläseluft aufweist, der über einen Kanal (68) in ein Saugrohr (38) der Kehrmaschine rückgeführt ist.

13. Kehrmaschine nach Anspruch 12,
**dadurch gekennzeichnet, dass**
sich der Kanal (68) in Richtung des Saugrohres (38) verjüngt.

14. Kehrmaschine nach zumindest einem der vorstehenden Ansprüche 12 oder 13,
**dadurch gekennzeichnet, dass**
sich der Querschnitt des Saugrohres (38) im Bereich des Eintritts des Kanals (68) erweitert.

15. Kehrmaschine nach zumindest einem der vorstehenden Ansprüche,
**dadurch gekennzeichnet, dass**
ein Gebläse (60, 62) vorgesehen ist, das eine Luftaustrittsöffnung (66) für Abluft aufweist, die trichterförmig erweitert ist.
